# EUROPÄISCHE PATENTSCHRIFT

(11) **EP 3 167 266 B1**
(45) Veröffentlichungstag und Bekanntmachung des Hinweises auf die Patenterteilung: **10.10.2018**
(21) Anmeldenummer: 15742197.5
(22) Anmeldetag: 10.07.2015
(51) Int. Cl.: G01M 5/00

(54) **PRÜFVORRICHTUNG FÜR FLEXIBLE, LANGGESTRECKTE PRÜFLINGE**
TEST DEVICE FOR FLEXIBLE, ELONGATED TEST OBJECTS
DISPOSITIF DE TEST POUR ÉCHANTILLONS ALLONGÉS FLEXIBLES

(30) Priorität: 10.07.2014 DE 102014213426
(43) Veröffentlichungstag der Anmeldung: 17.05.2017
(73) Patentinhaber: Inficon GmbH, 50968 Köln (DE)
(72) Erfinder: MEBUS, Stefan, 50733 Köln (DE)
(74) Vertreter: dompatent von Kreisler Selting Werner - Partnerschaft von Patent- und Rechtsanwälten mbB
(86) Internationale Anmeldenummer: PCT/EP2015/065811
(87) Internationale Veröffentlichungsnummer: WO 2016/005555

(56) Entgegenhaltungen:
- DE-A1- 10 120 881

## Beschreibung

Die Erfindung betrifft eine Prüfvorrichtung zum Durchführen von Belastungstests an langestreckten flexiblen Prüflingen, wie z.B. Kabeln, Schläuchen.

Von besonderer Bedeutung sind derartige Belastungstests für Multifunktionskabel oder für Leitungen, die sicherheitsrelevante Anforderungen erfüllen müssen, wie z.B. Schnüffelleitungen von Leckdetektoren. Schnüffelleitungen verbinden eine Schnüffelsonde mit einem Leckdetektor, um die Schnüffelsonde zur Lecksuche von Hand führen zu können, während der Leckdetektor ortsfest angeordnet ist. Eine Beschädigung der Schnüffelleitung durch Verschleiß oder durch Bruch der Schnüffelleitung kann zu einem falschen Messergebnis führen. Ein Sicherheitsrisiko kann bestehen, wenn ein vorhandenes Leck aufgrund einer defekten Schnüffelleitung nicht detektiert wird.

Um die Belastbarkeit eines Kabels zu testen, sind Schleppkettentests und Torsionstests bekannt, die jedoch die typischen Belastungen, die insbesondere an Schnüffelleitungen und Kabeln von handgeführten Schnüffelsonden zur Lecksuche auftreten, nicht nachbilden.

DE 101 20 881 A1, auf die sich der Oberbegriff von Anspruch 1 bezieht, beschreibt einen Kabelprüfstand für ein Kabel bei Wechselbelastungen.

Der Erfindung liegt die Aufgabe zugrunde, eine verbesserte Prüfvorrichtung zum Durchführen von Belastungstests an langestreckten, flexiblen Prüflingen zu schaffen.

Die erfindungsgemäße Prüfvorrichtung ist definiert durch Anspruch 1.

Der langestreckte Prüfling, bei dem es sich um ein Kabel, einen Schlauch, einen Riemen, eine Kette, eine Schnüffelleitung eines handgeführten Lecksuchgeräts oder um ein Multifunktionskabel handeln kann, wird an zwei Aufhängungen der Prüfvorrichtung befestigt. Von den beiden Aufhängungen ist zumindest eine erste Aufhängung entlang einer umlaufenden Bahn geführt. Ein Antrieb treibt die erste Aufhängung entlang der Bahn an. Die zweite Aufhängung kann ortsfest oder ebenfalls beweglich vorgesehen sein. Entscheidend ist, dass der Prüfling derart mit den beiden Aufhängungen verbunden wird, dass die Länge des Prüflings länger ist als der direkte Abstand zwischen den beiden Aufhängungen. Dadurch hängt der Prüfling zwischen den beiden Aufhängungen aufgrund seiner Flexibilität und angezogen von der Schwerkraft nach unten durch.

Die Prüfvorrichtung weist zudem einen Massenkörper auf, der entlang des Prüflings bewegbar mit dem Prüfling verbindbar ist. Der Massenkörper zieht den Prüfling im Bereich des Massenkörpers von der Schwerkraft angezogen nach unten. Wenn nun die erste Aufhängung entlang der Bahn umlaufend angetrieben wird, bewegt sich der Massenkörper über den Prüfling hinweg, so dass sich der
von dem Massenkörper nach unten gezogene Bereich des Prüflings kontinuierlich ändert. Dadurch wird eine massenbelastete, sich kontinuierlich entlang des Prüflings verschiebende Biegestelle geschaffen. In einem Dauertest kann so die Zug- und Biegebelastbarkeit des Prüflings getestet werden.

Die umlaufende Bahn kann von einem über Umlenkrollen geführten flexiblen Ringelement geschaffen werden, an welchem die erste Aufhängung befestigt ist. Bei dem flexiblen Ringelement kann es sich um eine Kette, einen Riemen, ein Kabel, ein Band, einen Schlauch usw. handeln. Es sollten mindestens drei Umlenkrollen auf unterschiedlichen Höhen angeordnet sein, so dass die erste Aufhängung während des Umlaufens entlang der Bahn ihre Höhe ändert. Beispielsweise können drei Umlenkrollen vorgesehen sein, von denen eine Umlenkrolle in einem oberen Scheitelpunkt angeordnet ist. Im Bereich des oberen Scheitelpunkts kann die zweite Aufhängung ortsfest angeordnet sein. Die beiden übrigen Umlenkrollen können z.B. auf gleicher Höhe unterhalb der obersten Umlenkrolle angeordnet sein. Die Bahn weist dann im Wesentlichen eine Dreiecksform auf.

Die Bahn kann ausschließlich in einer Vertikalebene umlaufend ausgebildet sein. Im Fall der Umlenkrollen sind diese dann in einer Vertikalebene angeordnet. Zumindest sollte die Bahn in einer Ebene geführt werden, die gegenüber einer Vertikalebene um maximal 45° und vorzugsweise um maximal 10° gekippt ist. Dadurch führt die erste Aufhängung im Wesentlichen eine Auf- und Abbewegung aus. Wenn die zweite Aufhängung ortsfest im Bereich der oberen Umlenkrolle angeordnet ist, wird die erste Aufhängung nicht nur auf und ab, sondern in Bezug auf die zweite Aufhängung in Horizontalrichtung auch noch hin und her bewegt. Dabei ergeben sich typische Belastungen von Kabeln oder Leitungen, die mit handgeführten Geräten verbunden sind, wie z.B. Schnüffelleitungen einer handgeführten Schnüffelsonde eines Lecksuchgeräts.

Der Massenkörper ist vorzugsweise mit einem Schlitten oder einer Laufrolle versehen, um gleitend oder rollend entlang des Prüflings bewegbar mit diesem verbunden zu werden. Der Massenkörper sollte je nach Art des Prüflings ein Gewicht von mindestens etwa 50% des Gewichts des Prüflings aufweisen. Der Massenkörper soll den Biegeradius des Prüflings im Durchhang deutlich verringern. Angestrebt werden hier circa 10 cm Biegeradius, was mit einer Masse von 0,5 Kg zu erreichen ist.

Die Bahn sollte derart ausgebildet sein, dass die erste Aufhängung während des Umlaufs einen Höhenunterschied von mindestens zwei Metern und vorzugsweise von ca. drei Metern überwindet. Ein geeigneter Höhenunterschied kann im Bereich zwischen 2,50 Meter und 3,50 Meter liegen, wobei die von der ersten Aufhängung in Horizontalrichtung überwundene Distanz während des Umlaufs im Wesentlichen ca. die Hälfte des Höhenunterschieds betragen sollte, d. h. also ca. 1,25 Meter bis 1,75 Meter und vorzugsweise ca. 1,50 Meter. Dies resultiert in einer zusätzlichen Torsionsbewegung des Prüflings.

Der Antrieb der Prüfvorrichtung kann eine der Umlenkrollen direkt antreiben. Die Umlenkrollen können als Zahnräder ausgebildet sein und einen Zahnriemen oder eine Kette antreiben.

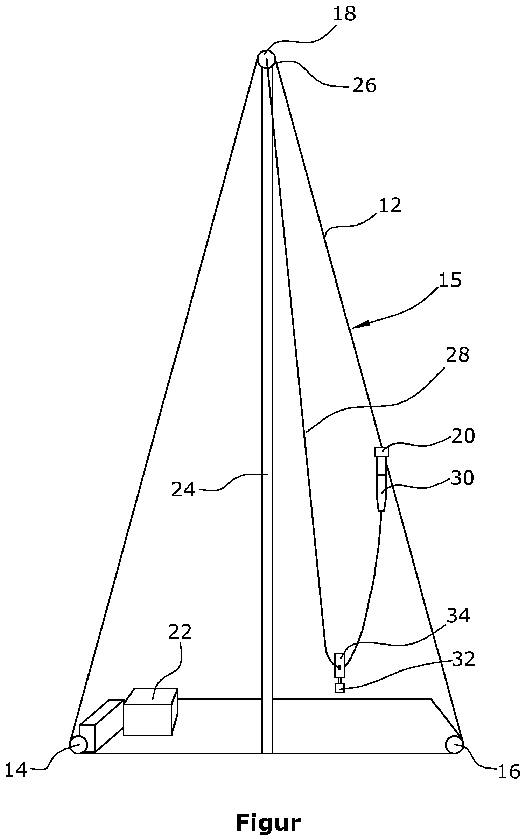

Im Folgenden wird anhand der Figur ein Ausführungsbeispiel der Erfindung näher erläutert. Die Fig. zeigt eine schematische Darstellung der Prüfvorrichtung.

Eine Rollenkette 12 ist als geschlossener, flexibler Ring ausgebildet und wird über drei Umlenkrollen 14, 16, 18 geführt. An der Kette 12 ist eine erste Aufhängung 20 befestigt. Die Umlenkrollen 14, 16, 18 sind an den Eckpunkten eines gleichschenkligen Dreiecks angeordnet, wobei sich die beiden unteren Umlenkrollen 14, 16 auf gleicher Höhe befinden und die obere Umlenkrolle 18 ca. 2,95 Meter oberhalb der beiden unteren Umlenkrollen 14, 16 angeordnet ist. Die beiden unteren Umlenkrollen 14, 16 sind in einem Abstand von ca. 1,45 Meter voneinander angeordnet. Die in der Fig. linke untere Umlenkrolle 14 ist von einem elektrischen Antrieb 22 elektrisch angetrieben und wenn der Antrieb 22 die Umlenkrolle 14 in Rotation versetzt, bewegt die Umlenkrolle 14 die Kette 12 entlang der Bahn 15 in Form eines gleichschenkligen Dreiecks mit abgerundeten Ecken. Die erste Aufhängung 20 wird dann entlang der Bahn 15 umlaufend geführt. Dabei führt die erste Aufhängung 20 eine Auf- und Abbewegung mit einem Höhenunterschied von ca. 2,95 Meter sowie eine Hin- und Herbewegung gegenüber der oberen Umlenkrolle 18 von ca. 1,45 aus.

Im Bereich der oberen Umlenkrolle 18, die an einem Vertikalträger 24 befestigt ist, ist eine zweite Aufhängung 26 ortsfest ebenfalls an den Träger 24 befestigt.

Die beiden Aufhängungen 20, 26 dienen zur Aufnahme des langgestreckten, flexiblen Prüflings 28, bei dem es sich um die Schnüffelleitung einer handgeführten Schnüffelsonde eines Lecksuchgeräts handelt. Das eine Ende des Prüflings 28 - nämlich der Handgriff 30 der Schnüffelsonde - ist an der ersten Aufhängung 20 eingehängt. Dabei ist die erste Aufhängung 20 schwenkbar ausgebildet, so dass der Prüfling 28 während der Auf- und Abbewegung und während der Hin- und Herbewegung stets aufgrund der Schwerkraftwirkung senkrecht nach unten von der ersten Aufhängung 20 herabhängt.

Ein anderes Ende des Prüflings 28, bei dem es sich um einen beliebigen Teil der Schnüffelleitung handeln kann, ist an der zweiten Aufhängung 26 ortsfest eingehängt. Dabei ist der Prüfling 28 derart in die beiden Aufhängungen 20, 26 eingehängt, dass die Länge des Prüflings 28 zwischen den beiden Aufhängungen 20, 26 größer ist als der maximale Abstand der beiden Aufhängungen 20, 26 während des Umlaufens entlang der Bahn 15.

In dem unteren Scheitelpunkt des Prüflings 28 ist ein Massenkörper 32 eingehängt. Der Massenkörper 32 weist eine Laufrolle 34 auf, die mit einem Hohlprofil versehen ist, um auf dem Prüfling 28 aufzuliegen und an dem Prüfling 28 gehalten zu werden.

Während die erste Aufhängung 20 entlang der Bahn 15 in Form eines gleichschenkligen Dreiecks mit abgerundeten Ecken geführt wird, verändert sich je nach Höhenposition der ersten Aufhängung 20 der untere Scheitelpunkt des Prüflings 28, in welchem der Massenkörper 32 eingehängt ist. Dabei rollt die Laufrolle 34 über den Prüfling 28 hinweg und überträgt die Gewichtskraft des Massenkörpers 32 auf den Prüfling 28. Der Durchmesser der Laufrolle 34 sollte mindestens 5 cm und maximal etwa 15 cm betragen (vorzugsweise circa 10 cm), um eine geeignete Biegung des Prüflings 28 in dessen unterem Scheitelpunkt zu bewirken, ohne den Prüfling 28 zu knicken.

Die erfindungsgemäße Prüfvorrichtung ist dazu geeignet und ausgebildet, Belastungstests an flexiblen, langgestreckten Prüflingen 28 in Form von Dauertests durchzuführen und verschleißbedingte Schwächen des Prüflings 28 zu erkennen.

## Patentansprüche

1. Prüfvorrichtung zur Durchführung von Belastungstests an flexiblen, langgestreckten Prüflingen (28), mit
einer ersten Aufhängung (20) für ein erstes Ende des Prüflings (28),
einer zweiten Aufhängung (26) zur Befestigung eines anderen Endes des Prüflings (28), und
einem an dem Prüfling (28) zwischen den beiden Aufhängungen (20, 26) anbringbaren Massenkörper (32),
**dadurch gekennzeichnet, dass**
die erste Aufhängung (20) entlang einer geschlossenen umlaufenden Bahn beweglich geführt ist,
die Prüfvorrichtung einen Antrieb (22) zum Bewegen der ersten Aufhängung (20) entlang der Bahn aufweist, und
der Massenkörper (32) entlang des Prüflings (28) bewegbar ist.

2. Prüfvorrichtung nach Anspruch 1, **dadurch gekennzeichnet, dass** die Bahn durch eine über Umlenkrollen (14, 16, 18) geführte Kette (12) oder einen über Umlenkrollen (14, 16, 18) geführten Riemen gebildet ist.

3. Prüfvorrichtung nach Anspruch 2, **dadurch gekennzeichnet, dass** die Kette (12) oder der Riemen über mindestens drei Umlenkrollen (14, 16, 18) im Wesentlichen in einer Vertikalebene geführt ist.

4. Prüfvorrichtung nach einem der vorhergehenden Ansprüche, **dadurch gekennzeichnet, dass** die Bahn (15) die erste Aufhängung (20) während des Umlaufens in Vertikalrichtung auf- und abführt.

5. Prüfvorrichtung nach einem der vorhergehenden Ansprüche, **dadurch gekennzeichnet, dass** der Massenkörper (32) mit einer Laufrolle (34) zum Einhängen an dem Prüfling (28) versehen ist, so dass die Laufrolle (34) während des Umlaufens der ersten Aufhängung (20) an dem Prüfling (28) entlang rollt.

6. Prüfvorrichtung nach einem der vorhergehenden Ansprüche, **dadurch gekennzeichnet, dass** die zweite Aufhängung (26) im Bereich des höchsten Umkehrpunktes der Umlaufbewegung der ersten Aufhängung (20) vorgesehen ist.

7. Prüfvorrichtung nach einem der vorhergehenden Ansprüche, **dadurch gekennzeichnet, dass** der Prüfling (28) ein Kabel oder ein Schlauch ist.

8. Prüfvorrichtung nach einem der vorhergehenden Ansprüche, **dadurch gekennzeichnet, dass** die erste Aufnahme fest mit der Bahn verbindbar und zur schwenkbaren Aufnahme des Prüflings (28) ausgebildet ist.

## Claims

1. A test device for carrying out load tests on flexible elongated test objects (28), comprising
a first suspension (20) for a first end of the test object (28),
a second suspension (26) for fastening another end of the test object (28), and
a mass body (32) that can be attached to the test object (28) between the two suspensions (20,26),
**characterized in that**
the first suspension (20) is movably guided along a closed circulating path,
the test device comprises a drive (22) for moving the first suspension (20) along the path, and
the mass body (32) is movable along the test object (28).

2. The test device according to claim 1, **characterized in that** the path is formed by a chain (12) guided via deflection rollers (14,16,18) or by a belt guided via deflection rollers (14,16,18).

3. The test device according to claim 2, **characterized in that** the chain (12) or the belt is guided via at least three deflection rollers (14,16,18) substantially in a vertical plane.

4. The test device according to any one of the preceding claims, **characterized in that** the path (15) is arranged to guide the first suspension (20) upward and downward in vertical direction during circulation.

5. The test device according to any one of the preceding claims, **characterized in that** the mass body (32) is provided with a roller (34) to be suspended on the test object (28) in such a manner that, during the circulation of the first suspension (20), the roller (34) rolls along the test object (28).

6. The test device according to any one of the preceding claims, **characterized in that** the second suspension (26) is provided in the region of the highest reversal point of the circulating movement of the first suspension (20).

7. The test device according to any one of the preceding claims, **characterized in that** the test object (28) is a cable or a hose.

8. The test device according to any one of the preceding claims, **characterized in that** the first suspension is adapted to be fixedly connected to the path and is designed for pivotal reception of the test object (28).

## Revendications

1. Dispositif de test, destiné à effectuer des tests de contrainte sur des échantillons souples allongés (28), comprenant
une première suspension (20) destiné à une première extrémité de l'échantillon (28),
une deuxième suspension (26) destinée à fixer une autre extrémité de l'échantillon (28), et
un corps de masse (32) pouvant être monté sur l'échantillon (28) entre les deux suspensions (20, 26), **caractérisé en ce que**
la première suspension (20) est guidée de manière mobile le long d'un chemin en circuit fermé,
le dispositif de test comprend un entraînement (22) destiné à déplacer la première suspension (20) le long du chemin, et
le corps de masse (32) est mobile le long de l'échantillon (28).

2. Dispositif de test selon la revendication 1, **caractérisé en ce que** le chemin est formé par une chaîne (12) guidée par des poulies de renvoi (14, 16, 18) ou par une courroie guidée par des poulies de renvoi (14, 16, 18) .

3. Dispositif de test selon la revendication 2, **caractérisé en ce que** la chaîne (12) ou la courroie est guidée sensiblement dans un plan vertical sur au moins trois poulies de renvoi (14, 16, 18).

4. Dispositif de test selon l'une des revendications précédentes, **caractérisé en ce que** le chemin (15) élève ou abaisse la première suspension (20) pendant la rotation dans la direction verticale.

5. Dispositif de test selon l'une des revendications précédentes, **caractérisé en ce que** le corps de masse (32) est pourvu d'un galet (34) destiné à être fixé à l'échantillon (28) de telle sorte que le galet (34) roule le long de l'échantillon (28) pendant la rotation de la première suspension (20).

6. Dispositif de test selon l'une des revendications précédentes, **caractérisé en ce que** la deuxième suspension (26) est prévu au niveau du point d'inversion le plus élevé du mouvement de rotation de la première suspension (20).

7. Dispositif de test selon l'une des revendications précédentes, **caractérisé en ce que** l'échantillon (28) est un câble ou un tuyau.

8. Dispositif d'essai selon l'une des revendications précédentes, **caractérisé en ce que** le premier logement peut être relié de manière fixe au chemin et est conçu pour recevoir de manière pivotante l'échantillon (28).
